# FASCICULE DE BREVET EUROPEEN

(11) **EP 2 387 921 B1**
(45) Date de publication et mention de la délivrance du brevet: **12.10.2016**
(21) Numéro de dépôt: 11305605.5
(22) Date de dépôt: 18.05.2011
(51) Int. Cl.: A47J 27/06

(54) **Dispositif de chauffage d'aliments à deux chambres superposées avec évent**
Gerät zum Erwärmen von Lebensmitteln mit zwei übereinanderliegenden Kammern und Entlüftung.
FOOD HEATING DEVICE WITH TWO SUPERPOSED CHAMBERS COMPRISING VENT

(30) Priorité: 18.05.2010 FR 1053844
(43) Date de publication de la demande: 23.11.2011
(73) Titulaire: SEB S.A., 69130 Ecully (FR)
(72) Inventeur: Charles, Patrick, 65290, Louey (FR); Dominguez, Augustin, 65000, Tarbes (FR); Lacourpaille, Gérard, 65380, Ossun (FR)
(74) Mandataire: Cémeli, Eric Philippe Laurent

(56) Documents cités:
- US-A- 1 418 378
- US-A- 5 119 800
- US-A- 5 381 729

## Description

La présente invention concerne le domaine technique des appareils de chauffage d'aliments dans une enceinte confinée mais non hermétiquement close.

La présente invention concerne plus particulièrement, mais non exclusivement, les appareils prévus pour la réalisation de yaourts et/ou entremets.

La réalisation de préparations à base de lait et de ferments, telles que les yaourts, ou à base de lait et de présure, telles que le fromage blanc ou le fromage caillé appelé aussi faisselle, s'effectue à des températures relativement basses, de l'ordre de 36 à 40°C pour la réalisation de fromage blanc ou de fromage caillé, et de l'ordre de 40 à 50°C pour la réalisation de yaourts. Ces transformations sont des fermentations dégageant une certaine humidité à l'intérieur de l'enceinte.

D'autres préparations, telles que par exemple les entremets sucrés et/ou salés, sont réalisées à des températures plus élevées, par exemple en utilisant un chauffage des aliments à la vapeur. Il peut être souhaité dans certains cas que les aliments rentrent le moins possible en contact avec la vapeur.

Il est connu du document US 2008 206437 un dispositif de chauffage d'aliments en portions séparées comportant une chambre inférieure et une chambre supérieure délimitées par un support comprenant des ouvertures dans lesquelles sont insérés des récipients. Un couvercle est agencé sur le support, et le support comporte d'autres passages non obturés. Ces dispositions permettent d'homogénéiser la température d'ambiance dans la chambre inférieure et la chambre supérieure. Toutefois la vapeur issue de la chambre inférieure peut se diffuser dans la chambre supérieure, favorisant ainsi la formation de condensats dans la chambre supérieure. Un inconvénient de la construction proposée est le risque de retombées de condensats dans les récipients portés par le support.

Un objet de la présente invention est de proposer un dispositif de chauffage d'aliments dans lequel la vapeur ou l'humidité présente dans l'espace de chauffage peut être évacuée en limitant les risques de retombées de condensats dans la chambre supérieure.

La présente invention est atteinte avec un dispositif de chauffage d'aliments, comportant une chambre inférieure et une chambre supérieure délimitées par un support comprenant au moins un orifice pour suspendre un récipient, au moins une ouverture d'échappement étant ménagée dans le support, la chambre supérieure étant également délimitée par un couvercle principal, du fait que le couvercle principal comporte au moins un puits agencé au-dessus de la ou de chaque ouverture d'échappement ménagée dans le support, la chambre inférieure communiquant avec l'extérieur par la ou par chaque ouverture d'échappement ménagée dans le support, la ou chaque ouverture d'échappement étant coiffée par le ou par l'un des puits issu(s) du couvercle principal pour canaliser vers l'extérieur la vapeur ou l'humidité formée dans la chambre inférieure et s'échappant par la ou par chaque ouverture d'échappement. Le puits coiffant l'ouverture d'échappement permet de canaliser vers l'extérieur la vapeur ou l'humidité formée dans la chambre inférieure et s'échappant par l'ouverture d'échappement.

Selon une forme de réalisation, le ou chaque puits ménage un passage avec la ou avec l'une des ouverture(s) d'échappement. Le passage entre le puits et l'ouverture d'échappement permet d'éviter que les condensats formés dans le puits ne puissent retomber dans l'ouverture d'échappement et/ou boucher ladite ouverture d'échappement. De plus, en l'absence de dégagement de vapeur par l'ouverture d'échappement, le passage permet également de contribuer à l'homogénéisation de la température d'ambiance dans les deux chambres inférieure et supérieure.

Avantageusement alors, le ou chaque passage est annulaire. Ainsi le puits s'étend à distance de l'ouverture d'échappement. Toutefois la largeur du passage n'est pas nécessairement constante tout autour de la partie inférieure du puits.

Avantageusement encore, la ou chaque ouverture d'échappement est formée par une cheminée issue du support. La cheminée s'étendant dans la chambre supérieure permet d'éviter la retombée dans la chambre inférieure des condensats formés dans la chambre supérieure.

Avantageusement alors, le ou chaque puits présente un bord annulaire inférieur s'étendant en dessous d'un bord annulaire supérieur de la ou de l'une des cheminée(s). La chicane ainsi formée entre la cheminée et le puits permet de mieux canaliser la vapeur issue de la cheminée. Toutefois le bord annulaire supérieur de la cheminée et le bord annulaire inférieur du puits ne s'étendent pas nécessairement dans des plans.

Avantageusement encore, le couvercle principal comporte au moins un autre puits agencé au dessus d'une paroi pleine du support. Cette disposition permet de limiter les condensations provoquées par l'évaporation des préparations lors de la fermentation de yaourts, en évitant également la retombée des condensats dans les récipients contenant les préparations.

Selon un mode de réalisation avantageux le couvercle principal repose sur le support.

Ces objets sont également atteints avec un appareil électrique pour la réalisation de préparations culinaires en portions séparées, comportant une base chauffante, un couvercle principal, un support intercalé entre la base chauffante et le couvercle principal, le support portant au moins un récipient pour contenir la préparation alimentaire, du fait que le support et le couvercle principal appartiennent à un dispositif de chauffage d'aliments selon l'une des caractéristiques précitées. En alternative, la chambre inférieure du dispositif de chauffage d'aliments peut notamment comporter une cuve prévue pour être disposée sur une base chauffante indépendante, telle que par exemple une plaque de cuisson.

Avantageusement alors, le support repose sur la base chauffante.

Avantageusement alors, la base chauffante comporte un réservoir d'eau associé à des moyens de chauffage.

Selon une forme de réalisation avantageuse, le réservoir d'eau est logé dans la chambre inférieure.

Avantageusement alors, le réservoir d'eau est formé par une cavité ménagée sur la partie supérieure de la base chauffante.

Selon un mode de réalisation avantageux, la base chauffante comprend une plaque métallique associée aux moyens de chauffage.

Avantageusement alors, l'appareil comprend des moyens de commande assurant le fonctionnement des moyens de chauffage selon un premier mode limitant la température de la plaque métallique en dessous de 100°C et selon un deuxième mode autorisant une température de la plaque métallique supérieure à 100°C.

Avantageusement encore, le fond de chaque récipient porté par le support est distant de la base chauffante.

D'autres caractéristiques et avantages de l'invention se dégageront de la description qui va suivre en regard des dessins annexés qui ne sont donnés qu'à titre d'exemples non limitatifs :
- la figure 1 est une vue de face d'un appareil électrique pour la réalisation de préparations culinaires en portions séparées selon l'invention,
- la figure 2 est une vue en perspective et éclaté de l'appareil illustré sur la figure 1,
- la figure 3 est une vue en coupe transversale de l'appareil illustré sur les figures 1 et 2,
- la figure 4 est une vue en perspective et éclaté de la base chauffante de l'appareil illustré sur les figures 1 à 3,
- la figure 5 est une vue en coupe transversale de la base chauffante illustrée sur la figure 4,
- la figure 6 est une vue de dessus de l'appareil illustré sur la figure 1,
- la figure 7 est une vue en coupe transversale selon le plan CC de la figure 6.

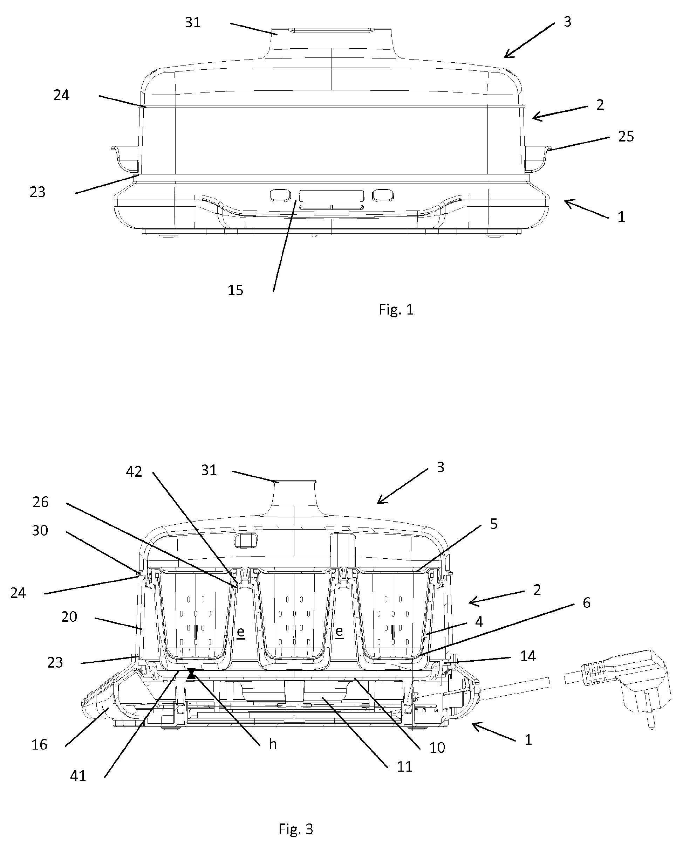

Un exemple de réalisation d'un appareil électrique pour la réalisation de préparations culinaires en portions séparées est illustré aux figures 1 à 7.

La figure 1 montre un appareil électrique pour la réalisation de préparations culinaires en portions séparées, comportant une base chauffante 1, un support 2 pour au moins un récipient 4 destiné à recevoir la préparation alimentaire et un couvercle principal 3.

Comme illustré sur la figure 1, le support 2 est intercalé entre la base chauffante 1 et le couvercle principal 3. Ainsi, le support 2 présente un bord inférieur 23 reposant sur la périphérie de la base chauffante 1 et la partie supérieure du support 2 comprend un bord supérieur 24 pour poser le couvercle principal 3. La surface extérieure du support 2 comprend des poignées de préhension 25.

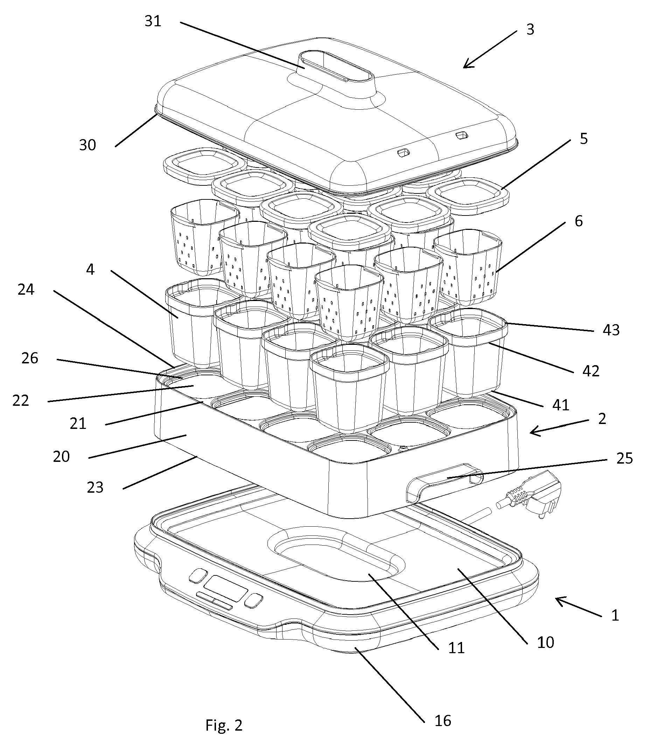

Comme le montre la figure 2, le support 2 comprend une couronne 20 reposant sur la périphérie de la base chauffante 1. La couronne 20 forme la paroi latérale du support 2. Les poignées de préhension 25 sont issues de la couronne 20. La couronne 20 est de préférence réalisée en matériau peu conducteur de chaleur, par exemple en matériau plastique.

Le support 2 comprend également un plateau 21 sensiblement parallèle à la base chauffante 1. Le plateau 21 occupe l'espace intérieur de la couronne 20. Selon l'invention, le plateau 21 est muni d'orifices 22. Ces orifices 22 permettent de positionner les récipients 4 dans l'appareil électrique pour la réalisation de préparations culinaires. Selon la variante de réalisation représentée, le plateau 21 comprend douze orifices 22. Sans sortir du cadre de l'invention, il est possible de pratiquer un nombre différent d'orifices et notamment de ne réaliser qu'un seul orifice pour un seul récipient, le support 2 entourant alors ledit récipient sur la majeure partie de la hauteur dudit récipient. Ainsi le support 2 comprend au moins un orifice 22 pour suspendre chaque récipient 4 de sorte que le fond 41 de chaque récipient 4 soit distant de la base chauffante 1. Le plateau 21 porte le ou les orifices 22 pour chaque récipient 4.

Comme le montre plus précisément la vue en coupe de la figure 3, le support 2 permet de suspendre les récipients 4 au-dessus de la base chauffante 1. Ainsi les récipients 4 ne reposent pas sur la base chauffante 1. Au contraire, le fond 41 des récipients 4 est distant d'une hauteur h de la base chauffante 1. A titre d'exemple, la hauteur h est comprise entre 2 et 15 mm, et de préférence entre 3 et 10 mm. Tel que bien visible sur la figure 3, le support 2 entoure les récipients 4 sur la majeure partie de la hauteur des récipients 4. Plus particulièrement, le support 2 s'étend le long de la plus grande partie de la paroi latérale des récipients 4 s'étendant en dessous des orifices 22, et s'arrête un peu au dessus du fond 41 des récipients 4. Ainsi le fond 41 de chaque récipient 4 dépasse en dessous du support 2.

Chaque récipient 4 comprend un épaulement 42 au voisinage d'un bord supérieur 43. Ainsi, lorsque le récipient 4 est mis en place dans le support 2, l'épaulement 42 vient en appui sur le bord 26 de l'orifice 22 associé du support 2. Le récipient 4 est alors bloqué en translation et n'atteint pas la base chauffante 1. Les dimensions de la partie inférieure de chaque récipient 4 sont donc inférieures aux dimensions de l'orifice 22. Par ailleurs, la zone de contact entre l'épaulement 42 et le bord 26 de l'orifice 22 crée une zone d'étanchéité permettant d'isoler la partie supérieure du récipient 4 de la chaleur ou d'éventuels dégagements de vapeur provenant de la base chauffante 1.

Selon la variante de réalisation représentée, les récipients 4 peuvent être équipés de couvercles 5. Ces couvercles 5 sont utilisés uniquement pour la conservation des préparations culinaires après cuisson ou fermentation dans l'appareil selon l'invention. De même, les récipients 4 peuvent comprendre un réceptacle interne perforé 6 pour la préparation de fromage blanc ou faisselle.

La hauteur du plateau 21 sur la couronne 20 du support 2 et la hauteur de la couronne 20 permettent notamment de manipuler facilement l'ensemble des récipients 4 grâce aux poignées de préhension 25. Dans la variante de réalisation illustrée sur les figures, le support 2 est réalisé en une seule pièce.

Selon une variante de réalisation non représentée, la hauteur de la couronne 20 est déterminée pour que, même lorsque le support 2 ne repose pas sur la base chauffante 1, il soit possible de poser le support 2 et ses récipients 4 sur une surface plane, sans que le fond 41 des récipients 4 ne repose sur cette surface.

Comme décrit précédemment, le couvercle principal 3 repose sur le bord supérieur 24 du support 2. Pour assurer une certaine étanchéité de fermeture entre le couvercle principal 3 et le support 2, la périphérie du couvercle principal 3 comprend un épaulement 30 qui vient en appui sur le bord supérieur 24 du support 2. Le couvercle principal 3 comprend également une poignée de préhension 31.

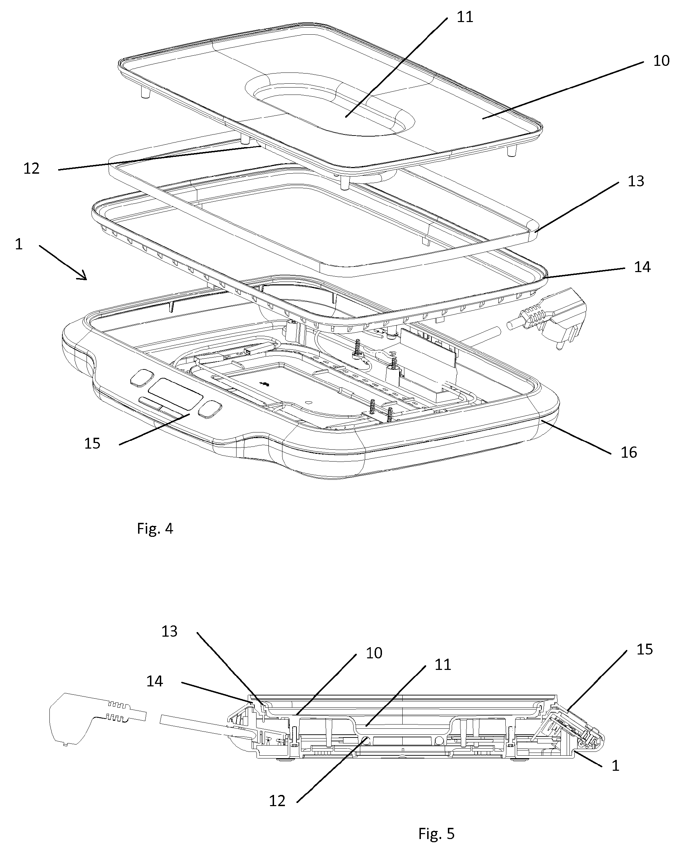

La base chauffante 1 va à présent être décrite en référence aux figures 4 et 5. La base chauffante 1 de l'appareil selon l'invention comprend une plaque métallique 10 associée à des moyens de chauffage 12. La plaque métallique est logée dans l'embase 16. L'embase 16 comprend en outre un panneau de commande 15 et l'électronique associée pour piloter les moyens de chauffage 12. Afin d'isoler thermiquement la plaque métallique 10 de l'embase 16, un joint 13 est monté sur la périphérie de la plaque métallique 10. Par ailleurs, une entretoise 14 est utilisée pour l'assemblage de la plaque métallique 10 sur l'embase 16. Lors de l'assemblage, le joint 13 est monté en force sur le bord de la plaque métallique 10. Ensuite, l'entretoise 14 est clipsée sur l'embase 16. Enfin, la plaque métallique 10 munie du joint 13 est insérée dans l'embase 16. L'entretoise 14 forme également la surface d'appui du bord inférieur 23 du support 2. L'entretoise 14 étant isolée thermiquement de la plaque métallique 10 par le joint 13, le support 2 ne subit pas d'exposition à une température excessive.

La plaque métallique 10 est par exemple réalisée en aluminium pour assurer une répartition homogène de la température sur toute la surface de la plaque métallique 10, et de préférence en aluminium moulé permettant d'obtenir un bon rayonnement pour chauffer les récipients 4. Les moyens de chauffage 12 sont disposés dans la partie centrale de la plaque métallique 10. La plaque métallique 10 peut comprendre une cavité 11 dimensionnée pour recevoir une quantité calibrée de liquide, par exemple sensiblement au centre de la plaque métallique 10. Les dimensions de la cavité 11 sont déterminées pour accueillir une quantité calibrée de liquide tel que de l'eau. A titre d'exemple, le volume de la cavité 11 permet d'accueillir une quantité d'eau comprise entre 10 et 20 cl. La plaque métallique 10 présente un bord relevé permettant de contenir les condensats formés sous le support 2. Si désiré, le fond de la plaque métallique 10 peut présenter une inclinaison du bord relevé vers la cavité 11, de manière à recueillir lesdits condensats dans la cavité 11. Les moyens de chauffage 12 sont par exemple formés par un élément chauffant blindé, fixé sous la plaque métallique 10 par exemple au niveau de la cavité 11, tel que visible sur la figure 4.

La base chauffante 1 comprend ainsi des moyens de chauffage surfacique placés sous les récipients 4, permettant de réaliser une chauffe homogène sous les récipients 4.

L'utilisation du support 2 selon l'invention permet d'éviter un contact direct entre les récipients 4 et la plaque métallique 10 chauffante, ce qui permet d'homogénéiser la montée et le maintien en température des récipients 4. En effet, l'espace délimité par la plaque métallique 10, le plateau 21 et la couronne 20 du support, forme un espace de chauffage e sensiblement homogène de la surface extérieure des récipients 4. Ce mode de chauffage permet d'améliorer la qualité des préparations culinaires réalisées dans l'appareil selon l'invention. Afin d'améliorer l'isolation thermique de l'espace de chauffage e, le support 2 est réalisé en matériau peu conducteur de chaleur, par exemple en matière plastique.

L'appareil selon l'invention peut fonctionner selon au moins deux modes : un premier mode dit à chaleur sèche et un deuxième mode dit à chaleur humide.

Le premier mode dit à chaleur sèche est particulièrement adapté pour la préparation de yaourt par fermentation de ferments, de fromage blanc ou de faisselle par fermentation de présure. Dans ce premier mode, la température dans l'espace de chauffage e est régulée à environ 45° pour les yaourts, ou 38°C pour les fromages blancs ou les faisselles. Pour cela et de façon connue en soi, un dispositif de régulation thermostatique (non représenté) régule l'alimentation électrique des moyens de chauffage 12 pour maintenir cette température dans l'espace de chauffage e. Ce dispositif de régulation thermostatique comporte par exemple un capteur de type CTN monté contre la plaque métallique 10, avec une température de consigne pour l'alimentation électrique des moyens de chauffage 12 de l'ordre de 60°C pour la fabrication de yaourts.

Le deuxième mode dit à chaleur humide permet la cuisson d'entremets. Ce deuxième mode nécessite une température plus importante. L'ambiance humide permet une montée rapide et un maintien de cette température. Pour mettre en oeuvre ce deuxième mode, la cavité 11 est remplie de la quantité d'eau calibrée, par exemple 150 ml, et la température de régulation est augmentée au dessus de 100°C pour permettre une évaporation de l'eau contenue dans la cavité. Si désiré, la puissance des moyens de chauffage 12 peut être également modulée en alternant des périodes de chauffe et des périodes d'arrêt.

Le panneau de commande 15 permet de choisir entre plusieurs programmes mettant en oeuvre l'un ou l'autre des deux modes. La fabrication de yaourts ou de fromages blancs peut faire l'objet de deux programmes distincts utilisant le premier mode. Ainsi l'appareil électrique comprend des moyens de commande assurant le fonctionnement des moyens de chauffage 12 selon un premier mode limitant la température de la plaque métallique 10 en dessous de 100°C et selon un deuxième mode autorisant une température de la plaque métallique 10 supérieure à 100°C. Sans sortir du cadre de l'invention, le panneau de commande 15 et l'électronique associée peuvent permettre un fonctionnement selon d'autres températures de consigne comprises par exemple entre 35° et 90°, avec ou sans ajout de liquide dans la cavité 11.

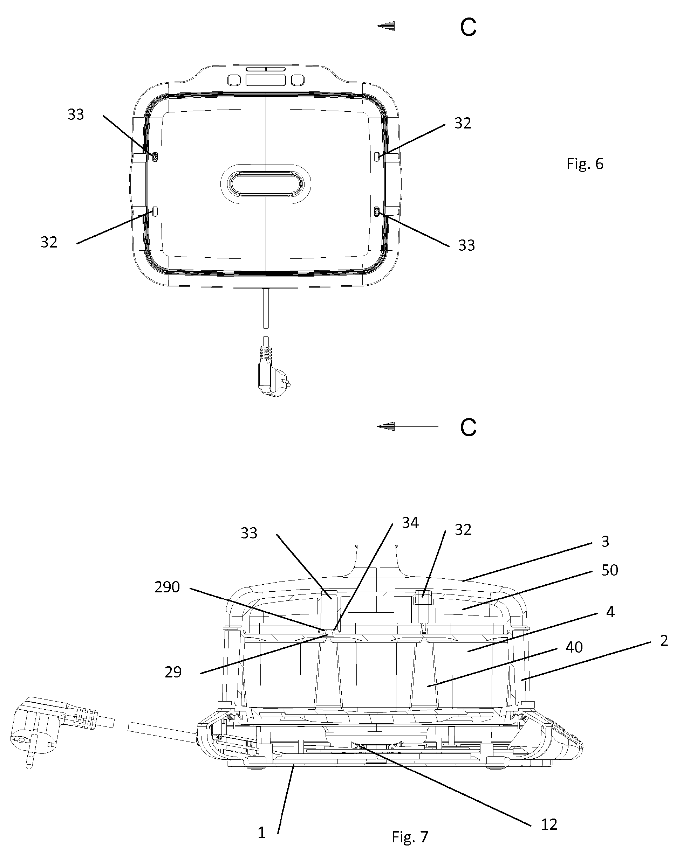

Tel que mieux visible sur les figures 6 et 7, le couvercle principal 3 comporte au moins un puits 33 agencé au dessus d'une ouverture d'échappement 29 ménagée dans le support 2.

Le puits 33 s'étend vers l'intérieur de l'appareil et met en communication l'intérieur de l'appareil avec l'extérieur. Le plateau 21 du support 2 comprend au moins une ouverture d'échappement 29 située à l'aplomb d'un puits 33 de sorte que l'ouverture d'échappement 29 soit coiffée par le puits 33.

Selon l'invention, l'extrémité du puits 33 s'étendant vers l'intérieur est suffisamment proche de l'ouverture d'échappement 29 pour que la vapeur ou l'humidité qui s'échappe de l'ouverture d'échappement 29 passe sensiblement intégralement vers l'extérieur au travers du puits 33.

La forme du puits 33 peut être cylindrique, conique ou toute autre forme permettant la circulation de vapeur.

L'invention concerne ainsi un dispositif de chauffage d'aliments comportant une chambre inférieure 40 et une chambre supérieure 50 délimitées par le support 2 comprenant au moins un orifice 22 pour suspendre un récipient 4, la chambre supérieure 50 étant également délimitée par le couvercle principal 3, dans lequel la chambre inférieure 40 communique avec l'extérieur par au moins une ouverture d'échappement 29 ménagée dans le support 2, ladite ouverture d'échappement 29 étant coiffée par le puits 33 issu du couvercle principal 3.

L'appareil électrique pour la réalisation de préparations culinaires en portions séparées, comportant la base chauffante 1, le couvercle principal 3 et le support 2 portant au moins un récipient 4 pour contenir la préparation alimentaire, intercalé entre la base chauffante 1 et le couvercle principal 3, comprend ainsi un dispositif de chauffage d'aliments tel que précité, auxquels appartiennent le support 2 et le couvercle principal 3.

Le couvercle principal 3 repose sur le support 2. Le support 2 repose sur la base chauffante 1. La base chauffante 1 comporte un réservoir d'eau associé aux moyens de chauffage 12. Le réservoir d'eau est formé par la cavité 11 ménagée sur la partie supérieure de la base chauffante 1. Ainsi le réservoir d'eau est logé dans la chambre inférieure 40.

Plus particulièrement, le puits 33 ménage un passage 34 avec l'ouverture d'échappement 29. Ainsi, lorsque la vapeur traverse le puits 33, celle-ci peut condenser sur la surface intérieure du puits 33 et s'écouler jusqu'au support 2. Les condensats s'écoulent le long de la paroi du puits 33 jusque sur le support 2 sans obstruer l'ouverture d'échappement 29.

La dimension de l'ouverture d'échappement 29 est déterminée pour éviter la formation de surpressions dans l'espace de chauffage e, ces surpressions pouvant entraîner des élévations de température néfastes notamment pour la texture des préparations à base d'oeuf.

L'ouverture d'échappement 29 est formée par une cheminée 290 issue du support 2. La cheminée 290 s'étend vers le puits 33 perpendiculairement au plateau 21 du support 2.

Le puits 33 présente un bord annulaire inférieur s'étendant en dessous d'un bord annulaire supérieur de la cheminée 290. Le puits 33 s'étend à distance de la cheminée 290 de sorte que le passage 34 est annulaire.

Ainsi le diamètre de la cheminée 290 est inférieur au diamètre du puits 33 autorisant la cheminée 290 à pénétrer dans le puits 33. Ainsi, l'extrémité inférieure du puits 33 s'étend en-dessous de l'extrémité supérieure de la cheminée 290. Selon cette variante, la chicane formée par la cheminée 290 et le puits 33 augmente l'efficacité pour évacuer la vapeur.

Par ailleurs, le couvercle principal 3 comporte au moins un autre puits 32 agencé au dessus d'une paroi pleine du support 2. L'autre puits 32 permet d'évacuer l'humidité de la chambre supérieure 50 en laissant retomber les éventuels condensats entre les récipients 4.

Tel que visible sur la figure 6, le couvercle principal 3 comporte deux puits 33 agencés de manière opposée, ainsi que deux autres puits 32 agencés de manière opposée. Chacun des puits 33 coiffe une ouverture d'échappement 29.

Lorsque l'appareil fonctionne dans le mode où de l'eau est versée dans la cavité 11 de la plaque métallique 10, la vapeur générée occupe l'espace de chauffage e correspondant à la chambre inférieure 40, l'air présent pouvant être évacué par la ou les ouvertures d'échappement 29. La vapeur assure ainsi une montée en température rapide et un chauffage homogène des récipients 4. La vapeur générée est ensuite évacuée par les ouvertures d'échappement 29 et canalisée vers l'extérieur grâce aux puits 33 qui coiffent les ouvertures d'échappement 29. Ainsi, la partie supérieure des récipients 4 agencée dans la chambre supérieure 50 au dessus du support 2 n'est pas chauffée par la vapeur s'échappant de l'espace de chauffage e correspondant à la chambre inférieure 40 sous le support 2. La formation de condensats dans la chambre supérieure 50 peut ainsi être très fortement limitée, voire évitée.

A titre de variante, le dispositif de chauffage d'aliments selon l'invention peut comporter une seule ouverture d'échappement 29 coiffée par un puits 33, ou plusieurs ouvertures d'échappement 29 coiffées par des puits 33.

A titre de variante, le dispositif de chauffage d'aliments selon l'invention ne comporte pas nécessairement une base chauffante 1 comportant des moyens de chauffage 12. Le support 2 pourrait notamment reposer sur une base dépourvue de moyens de chauffage, cette base étant par exemple formée par une cuve prévue pour être disposée sur une source chauffante indépendante.

La présente invention n'est nullement limitée à l'exemple de réalisation décrit et à ses variantes, mais englobe de nombreuses modifications dans le cadre des revendications.

## Revendications

1. Dispositif de chauffage d'aliments, comportant une chambre inférieure (40) et une chambre supérieure (50) délimitées par un support (2) comprenant au moins un orifice (22) pour suspendre un récipient (4), au moins une ouverture d'échappement (29) étant ménagée dans le support (2), la chambre supérieure (50) étant également délimitée par un couvercle principal (3), **caractérisé en ce que** le couvercle principal (3) comporte au moins un puits (33) agencé au-dessus de la ou de chaque ouverture d'échappement (29) ménagée dans le support (2), la chambre inférieure (40) communiquant avec l'extérieur par la ou par chaque ouverture d'échappement (29) ménagée dans le support (2), la ou chaque ouverture d'échappement (29) étant coiffée par le ou par l'un des puits (33) issu(s) du couvercle principal (3) pour canaliser vers l'extérieur la vapeur ou l'humidité formée dans la chambre inférieure (40) et s'échappant par la ou par chaque ouverture d'échappement (29).

2. Dispositif de chauffage d'aliments selon la revendication 1, **caractérisé en ce que** le ou chaque puits (33) ménage un passage (34) avec la ou avec l'une des ouverture(s) d'échappement (29).

3. Dispositif de chauffage d'aliments selon la revendication 2, **caractérisé en ce que** le ou chaque passage (34) est annulaire.

4. Dispositif de chauffage d'aliments selon l'une des revendications 1 à 3, **caractérisé en ce que** la ou chaque ouverture d'échappement (29) est formée par une cheminée (290) issue du support (2).

5. Dispositif de chauffage d'aliments selon la revendication 4, **caractérisé en ce que** le ou chaque puits (33) présente un bord annulaire inférieur s'étendant en dessous d'un bord annulaire supérieur de la ou de l'une des cheminée(s) (290).

6. Dispositif de chauffage d'aliments selon l'une des revendications 1 à 5, **caractérisé en ce que** le couvercle principal (3) comporte au moins un autre puits (32) agencé au dessus d'une paroi pleine du support (2).

7. Dispositif de chauffage d'aliments selon l'une des revendications 1 à 6, **caractérisé en ce que** le couvercle principal (3) repose sur le support (2).

8. Appareil électrique pour la réalisation de préparations culinaires en portions séparées, comportant une base chauffante (1), un couvercle principal (3), et un support (2) intercalé entre la base chauffante (1) et le couvercle principal (3), **caractérisé en ce que** le support (2) et le couvercle principal (3) appartiennent à un dispositif de chauffage d'aliments selon l'une des revendications 1 à 7.

9. Appareil électrique pour la réalisation de préparations culinaires en portions séparées selon la revendication 8, **caractérisé en ce que** le support (2) repose sur la base chauffante (1).

10. Appareil électrique pour la réalisation de préparations culinaires en portions séparées selon la revendication 9, **caractérisé en ce que** la base chauffante (1) comporte un réservoir d'eau associé à des moyens de chauffage (12).

11. Appareil électrique pour la réalisation de préparations culinaires en portions séparées selon la revendication 10, **caractérisé en ce que** le réservoir d'eau est logé dans la chambre inférieure (40).

12. Appareil électrique pour la réalisation de préparations culinaires en portions séparées selon l'une des revendications 10 ou 11, **caractérisé en ce que** le réservoir d'eau est formé par une cavité (11) ménagée sur la partie supérieure de la base chauffante (1).

13. Appareil électrique pour la réalisation de préparations culinaires en portions séparées selon l'une des revendications 10 à 12, **caractérisé en ce que** la base chauffante (1) comprend une plaque métallique (10) associée aux moyens de chauffage (12).

14. Appareil électrique pour la réalisation de préparations culinaires en portions séparées selon la revendication 13, **caractérisé en ce que** l'appareil comprend des moyens de commande assurant le fonctionnement des moyens de chauffage (12) selon un premier mode limitant la température de la plaque métallique (10) en dessous de 100°C et selon un deuxième mode autorisant une température de la plaque métallique (10) supérieure à 100°C.

15. Appareil électrique pour la réalisation de préparations culinaires en portions séparées selon l'une des revendications 8 à 14, **caractérisé en ce que** le fond (41) de chaque récipient (4) porté par le support (2) est distant de la base chauffante (1).

## Patentansprüche

1. Vorrichtung zum Erwärmen von Lebensmitteln mit einer unteren Kammer (40) und einer oberen Kammer (50), die von einem Gestell (2) begrenzt werden, das zumindest eine Öffnung (22) zum Einhängen eines Behältnisses (4) umfasst, zumindest einer Austrittsöffnung (29), die in dem Gestell (2) ausgebildet ist, wobei die obere Kammer (50) auch durch einen Hauptdeckel (3) begrenzt ist, **dadurch gekennzeichnet, dass** der Hauptdeckel (3) zumindest einen Schacht (33) aufweist, der über der oder jeder in dem Gestell (2) ausgebildeten Austrittsöffnung (29) angeordnet ist, wobei die untere Kammer (40) durch die oder jede in dem Gestell (2) ausgebildete Austrittsöffnung (29) mit der Außenseite in Verbindung steht, wobei die oder jede Austrittsöffnung (29) von dem Schacht oder einem der Schächte (33) überragt wird, der bzw. die aus dem Hauptdeckel (3) hervorgeht bzw. hervorgehen, um den Dampf oder die Feuchtigkeit, der bzw. die sich in der unteren Kammer (40) gebildet hat und durch die oder jede Austrittsöffnung (29) entweicht, nach außen zu leiten.

2. Vorrichtung zum Erwärmen von Lebensmitteln nach Anspruch 1, **dadurch gekennzeichnet, dass** der oder jeder Schacht (33) mit der Austrittsöffnung (29) oder einer der Austrittsöffnungen (29) einen Durchlass (34) bildet.

3. Vorrichtung zum Erwärmen von Lebensmitteln nach Anspruch 2, **dadurch gekennzeichnet, dass** der oder jeder Durchlass (34) ringförmig ist.

4. Vorrichtung zum Erwärmen von Lebensmitteln nach einem der Ansprüche 1 bis 3, **dadurch gekennzeichnet, dass** die oder jede Austrittsöffnung (29) durch einen Kamin (290) gebildet wird, der aus dem Gestell (2) hervorgeht.

5. Vorrichtung zum Erwärmen von Lebensmitteln nach Anspruch 4, **dadurch gekennzeichnet, dass** der oder jeder Schacht (33) einen ringförmigen unteren Rand aufweist, der unterhalb eines ringförmigen oberen Randes des Kamins (290) oder eines der Kamine (290) verläuft.

6. Vorrichtung zum Erwärmen von Lebensmitteln nach einem der Ansprüche 1 bis 5, **dadurch gekennzeichnet, dass** der Hauptdeckel (3) zumindest einen weiteren Schacht (32) aufweist, der oberhalb einer Vollwand des Gestells (2) angeordnet ist.

7. Vorrichtung zum Erwärmen von Lebensmitteln nach einem der Ansprüche 1 bis 6, **dadurch gekennzeichnet, dass** der Hauptdeckel (3) auf dem Gestell (2) ruht.

8. Elektrogerät für die Zubereitung von Speisen in getrennten Portionen mit einem Heizsockel (1), einem Hauptdeckel (3) und einem Gestell (2), das zwischen dem Heizsockel (1) und dem Hauptdeckel (3) eingefügt ist, **dadurch gekennzeichnet, dass** das Gestell (2) und der Hauptdeckel (3) zu einer Vorrichtung zum Erwärmen von Lebensmitteln nach einem der Ansprüche 1 bis 7 gehören.

9. Elektrogerät für die Zubereitung von Speisen in getrennten Portionen nach Anspruch 8, **dadurch gekennzeichnet, dass** das Gestell (2) auf dem Heizsockel (1) ruht.

10. Elektrogerät für die Zubereitung von Speisen in getrennten Portionen nach Anspruch 9, **dadurch gekennzeichnet, dass** der Heizsockel (1) einen zu Heizmitteln (12) gehörigen Wasserbehälter umfasst.

11. Elektrogerät für die Zubereitung von Speisen in getrennten Portionen nach Anspruch 10, **dadurch gekennzeichnet, dass** sich der Wasserbehälter in der unteren Kammer (40) befindet.

12. Elektrogerät für die Zubereitung von Speisen in getrennten Portionen nach Anspruch 10 oder 11, **dadurch gekennzeichnet, dass** der Wasserbehälter durch eine auf dem oberen Teil des Heizsockels (1) ausgebildeten Vertiefung (11) gebildet wird.

13. Elektrogerät für die Zubereitung von Speisen in getrennten Portionen nach einem der Ansprüche 10 bis 12, **dadurch gekennzeichnet, dass** der Heizsockel (1) eine zu Heizmitteln (12) gehörige Metallplatte (10) umfasst.

14. Elektrogerät für die Zubereitung von Speisen in getrennten Portionen nach Anspruch 13, **dadurch gekennzeichnet, dass** das Gerät Steuerungsmittel umfasst, die den Betrieb der Heizmittel (12) in einer ersten Betriebsart, bei der die Temperatur der Metallplatte (10) auf unter 100 °C begrenzt wird, und in einer zweiten Betriebsart, bei der eine Temperatur der Metallplatte (10) über 100 °C zugelassen wird, sicherstellen.

15. Elektrogerät für die Zubereitung von Speisen in getrennten Portionen nach einem der Ansprüche 8 bis 14, **dadurch gekennzeichnet, dass** der Boden (41) jedes von dem Gestell (2) getragenen Behältnisses (4) einen Abstand zum Heizsockel (1) hat.

## Claims

1. Device for heating food, comprising a lower chamber (40) and an upper chamber (50) delimited by a support (2) comprising at least one orifice (22) for suspending a container (4), at least one outlet opening (29) being formed in the support (2), the upper chamber (50) being also delimited by a main lid (3), **characterised in that** the main lid (3) comprises at least one well (33) arranged above the or each outlet opening (29) formed in the support (2), the lower chamber (40) communicating with the outside by the or each outlet opening (29) formed in the support (2), the or each outlet opening (29) being capped by the or one of the well(s) (33) from the main lid (3) to channel to the outside the steam or humidity formed in the lower chamber (40) and escaping through the or each outlet opening (29).

2. Device for heating food according to claim 1, **characterised in that** the or each well (33) forms a passage (34) with the or one of the outlet opening(s) (29).

3. Device for heating food according to claim 2, **characterised in that** the or each passage (34) is annular.

4. Device for heating food according to one of claims 1 to 3, **characterised in that** the or each outlet opening (29) is formed by a chimney (290) from the support (2).

5. Device for heating food according to claim 4, **characterised in that** the or each well (33) has a lower annular edge extending below an upper annular edge of the or one of the chimney(ies) (290).

6. Device for heating food according to one of claims 1 to 5, **characterised in that** the main lid (3) comprises at least one other well (32) arranged above a solid wall of the support (2).

7. Device for heating food according to one of claims 1 to 6, **characterised in that** the main lid (3) rests on the support (2).

8. Electrical appliance for making food preparations in separate portions, having a heating base (1), a main lid (3), and a support (2) inserted between the heating base (1) and the main lid (3), **characterised in that** the support (2) and the main lid (3) belong to a device for heating food according to one of claims 1 to 7.

9. Electrical appliance for making food preparations in separate portions according to claim 8, **characterised in that** the support (2) rests on the heating base (1).

10. Electrical appliance for making food preparations in separate portions according to claim 9, **characterised in that** the heating base (1) comprises a water tank associated with heating means (12).

11. Electrical appliance for making food preparations in separate portions according to claim 10, **characterised in that** the water tank is housed in the lower chamber (40).

12. Electrical appliance for making food preparations in separate portions according to claim 10 or 11, **characterised in that** the water tank is formed by a cavity (11) formed on the upper part of the heating base (1).

13. Electrical appliance for making food preparations in separate portions according to one of claims 10 to 12, **characterised in that** the heating base (1) comprises a metal plate (10) associated with the heating means (12).

14. Electrical appliance for making food preparations in separate portions according to claim 13, **characterised in that** the appliance comprises control means for controlling the operation of the heating means (12) according to a first mode limiting the temperature of the metal plate (10) to below 100 °C and according to a second mode allowing a temperature of the metal plate (10) greater than 100 °C.

15. Electrical appliance for making food preparations in separate portions according to one of claims 8 to 14, **characterised in that** the bottom (41) of each container (4) carried by the support (2) is far from the heating base (1).
